# EUROPÄISCHE PATENTSCHRIFT

(11) **EP 3 867 974 B1**
(45) Veröffentlichungstag und Bekanntmachung des Hinweises auf die Patenterteilung: **23.11.2022**
(21) Anmeldenummer: 20701049.7
(22) Anmeldetag: 20.01.2020
(51) Int. Cl.: H01Q 1/38, H01Q 9/28

(54) **PHOTOLEITENDE MEHRKANAL-TERAHERTZ-EMPFANGSANTENNE, EMPFÄNGER, TERAHERTZSYSTEM UND TERAHERTZVERFAHREN**
PHOTOCONDUCTIVE MULTICHANNEL TERAHERTZ RECEIVING ANTENNA, RECEIVER, TERAHERTZ SYSTEM AND TERAHERTZ METHOD
ANTENNE DE RÉCEPTION TÉRAHERTZ MULTICANAUX PHOTOCONDUCTRICE, RÉCEPTEUR, SYSTÈME TÉRAHERTZ ET PROCÉDÉ TÉRAHERTZ

(30) Priorität: 27.03.2019 EP 19165658
(43) Veröffentlichungstag der Anmeldung: 25.08.2021
(73) Patentinhaber: Fraunhofer-Gesellschaft zur Förderung der angewandten Forschung e.V., 80686 München (DE)
(72) Erfinder: NELLEN, Simon, 10587 Berlin (DE); GLOBISCH, Björn, 10587 Berlin (DE)
(74) Vertreter: Pfenning, Meinig & Partner mbB
(86) Internationale Anmeldenummer: PCT/EP2020/051315
(87) Internationale Veröffentlichungsnummer: WO 2020/192979

(56) Entgegenhaltungen:
- WO-A1-2009/036984
- DE-A1-102010 049 658
- DE-A1-102011 015 384
- GB-A- 2 438 215

## Beschreibung

Die Erfindung betrifft eine Empfangsantenne und einen Empfänger für Terahertzstrahlung, ein Terahertzsystem und ein Verfahren zum Erzeugen und Detektieren von Terahertzstrahlung unter Verwendung eines entsprechenden Terahertzsystems.

Eine Empfangsantenne für Terahertzstrahlung der Art, die Gegenstand der vorliegenden Erfindung ist, umfasst einen Antennenleiter und einen mit dem Antennenleiter verschalteten und durch Licht aktivierbaren ersten Photoleiter, der in einem aktivierten Zustand einen durch den Antennenleiter und den ersten Photoleiter fließenden Antennenstrom ermöglicht.

Empfangsantennen dieser Art, welche auch als photoleitende Terahertzantennen bezeichnet werden, sind zum Beispiel aus der Druckschrift DE 10 2010 049 658 A1 bekannt. Um die Amplitude und/oder die Phase der empfangenen Terahertzstrahlung in einem gegebenen Messintervall bestimmen zu können, müssen bei Empfangsantennen nach dem Stand der Technik stets sequentielle Antennenstrommessungen vorgenommen werden, bei denen die Zeitlage der optischen Anregung relativ zu der empfangenen Terahertzstrahlung variiert wird. Die sequentielle Messung mindestens zweier solcher Messpunkte ist selbst dann nötig, wenn nur eine Amplitude der Terahertzstrahlung gemessen werden soll, da diese ohne die Information der Phasenlage nicht eindeutig bestimmt werden kann. Mit der sequentiellen Messung geht ein entsprechender Zeitaufwand einher, welcher die Anwendung erschweren kann; ferner erhöht die nötige Verstellbarkeit der Zeitlage der optischen Anregung die Komplexität des Empfängers und der entsprechenden Terahertzverfahren.

Der vorliegenden Erfindung liegt dementsprechend die Aufgabe zugrunde, eine Empfangsantenne und einen Empfänger für Terahertzstrahlung sowie ein Terahertzsystem bereitzustellen, mit welchen das Empfangen von Terahertzstrahlung sowie das Analysieren der darin enthaltenen Informationen schneller und einfacher vorgenommen werden können, und entsprechend ein schnelleres und einfacheres Verfahren zum Erzeugen und Detektieren von Terahertzstrahlung unter Verwendung eines solchen Terahertzsystems vorzuschlagen.

Diese Aufgabe wird erfindungsgemäß gelöst durch eine Empfangsantenne für Terahertzstrahlung mit den Merkmalen des Anspruchs 1, einen Empfänger für Terahertzstrahlung mit den Merkmalen des Anspruchs 5, ein Terahertzsystem mit den Merkmalen des Anspruchs 10 und ein Verfahren zum Erzeugen und Detektieren von Terahertzstrahlung unter Verwendung eines entsprechenden Terahertzsystems mit den Merkmalen des Anspruchs 14. Vorteilhafte Ausgestaltungen, Weiterentwicklungen und Verwendungen der Erfindung ergeben sich mit den Merkmalen der Unteransprüche.

Eine erfindungsgemäße Empfangsantenne für Terahertzstrahlung weist außer dem eingangs genannten ersten Photoleiter mindestens einen ebenfalls mit dem Antennenleiter verschalteten und durch Licht aktivierbaren zweiten Photoleiter auf, der mit dem ersten Photoleiter parallel geschaltet ist und in einem aktivierten Zustand einen durch den Antennenleiter und den zweiten Photoleiter fließenden Antennenstrom ermöglicht, wobei zwischen jeden der Photoleiter und den Antennenleiter jeweils mindestens ein Hochpassfilter geschaltet ist.

Mit dem Einbringen von mindestens einem zweiten Photoleiter zusammen mit dem ersten Photoleiter wird ein gleichzeitiges Abtasten eines empfangenen Terahertzsignals mit mehreren optischen Signalen mit unterschiedlicher Zeitlage, also ein gleichzeitiges Messen der entsprechenden Antennenströme, ermöglicht, was den Messvorgang gegenüber der Verwendung nur eines Photoleiters entsprechend beschleunigen und die Verwendung einer Vorrichtung zum Verstellen der Zeitlage unnötig machen kann. Dafür genügt es, wenn zum Anregen oder Aktivieren der jetzt mindestens zwei Photoleiter zwei zeitlich versetzte optische Signale oder Signalanteile verwendet werden.

Es ist besonders auf die Funktion der Hochpassfilter hinzuweisen, die erfindungsgemäß jeweils zwischen den Photoleitern und den Antennenleiter geschaltet sind und zusammen mit den mehreren Photoleitern das gleichzeitige Messen mehrerer Antennenströme ermöglichen. Ohne die Hochpassfilter wären die Photoleiter miteinander elektrisch kurzgeschlossen, was eine individuelle Messung der Antennenströme unmöglich machen würde.

Typischerweise sind die Photoleiter an einem Fußpunkt des Antennenleiters angeordnet. Als Fußpunkt wird hierbei ein Teil des Antennenleiters bezeichnet, an dem beim Empfangen von Terahertzstrahlung eine durch die empfangene Terahertzstrahlung verursachte Wechselspannung anliegt, welcher also als ein mit einem Eingangswiderstand oder Fußpunktwiderstand der Antenne korrespondierender Punkt betrachtet werden kann.

Ein Antennenstrom fließt dann durch einen der Photoleiter, wenn es einen zeitlichen Überlapp zwischen dem aktivierten Zustand des Photoleiters und der durch die empfangene Terahertzstrahlung verursachten Wechselspannung gibt. Entsprechend kann ein messbarer Anteil des Antennenstroms ein Wechselstrom mit der auch Zwischenfrequenz genannten Frequenz f_{z} sein, die einer Differenzfrequenz f_{z} = |f_{THz} - f_{LO}| zwischen einer als Terahertzfrequenz f_{THz} bezeichneten Frequenz der Terahertzstrahlung und einer auch Lokaloszillatorfrequenz genannten Frequenz f_{LO} einer optischen Anregung des jeweiligen Photoleiters entspricht. Entsprechend wird ein Signal, das etwa der Amplitude und/oder der Phase der Terahertzstrahlung aufmoduliert ist, durch die Empfangsantenne demoduliert. In dem Spezialfall, dass f_{THz} und f_{LO} identisch sind, ist der Antennenstrom ein Gleichstrom.

Die Frequenzkanten der Hochpassfilter können so gelegt werden, dass Terahertzfrequenzen transmittiert, geringere Frequenzen aber nicht transmittiert werden. Die Frequenzkante kann entsprechend zwischen f_{z} und f_{THz} liegen. Terahertzfrequenzen f_{THz} können dabei Frequenzen etwa in einem Frequenzbereich von 0,05 THz bis 20 THz, typischerweise in einem Frequenzbereich von 0,1 THz bis 10 THz sein. Entsprechend kann mindestens einer der Hochpassfilter z. B. eine Transmissionskante zwischen 50 GHz und 100 GHz aufweisen.

Zwischen jedem der Photoleiter und dem mindestens einen Hochpassfilter, der zwischen diesen Photoleiter und den Antennenleiter geschaltet ist, kann jeweils eine Kontaktierung zur Abnahme eines Messsignals vorgesehen sein. Ein solches Messsignal kann einem niederfrequenten Anteil des Antennenstroms entsprechen, also einem solchen Anteil des Antennenstroms, der Frequenzen unterhalb einer bestimmten Frequenzkante, insbesondere unterhalb der Transmissionskante des Hochpassfilters aufweist.

Zur Realisierung des Photoleiters kommt jedes Material oder jede Materialkombination in Frage, deren elektrische Leitfähigkeit sich beim Absorbieren von elektromagnetischer Strahlung, beispielsweise sichtbarem, ultraviolettem oder infrarotem Licht, also eines optischen Signals, verändert, typischerweise vergrößert. Dabei spricht man auch von optischer Anregung oder Aktivierung des Photoleiters. Mindestens einer der Photoleiter kann eine aktive Schicht aufweisen, die auf einem Substrat angeordnet ist. Beispielsweise kann ein solcher Photoleiter unter Verwendung von III-V-Verbindungshalbleiters realisiert werden. Dabei kann die aktive Schicht beispielsweise im Materialsystem In-Ga-AI-As-P realisiert sein, das Substrat kann beispielsweise aus InP oder GaAs bestehen.

Der Antennenleiter kann eine auf einem Substrat angeordnete strukturierte Metallschicht sein. Dies ermöglicht insbesondere, die Empfangsantenne als optoelektronischen Chip zu realisieren, auf dem die optischen und elektronischen Elemente der Empfangsantenne integriert sind, was eine robuste und kompakte Bauform darstellt. Als Form des Antennenleiters kommen dabei etwa eine Bowtie-Form, also eine zweigeteilte Leiterform, umfassend zwei spiegelsymmetrisch angeordnete dreiecks- oder trapezförmige Leitersegmente, die sich zur Symmetrieachse hin verjüngen, oder auch eine Anordnung aus rechteckigen Streifen in Frage. Der Antennenleiter kann jedoch auch in dreidimensionalen Geometrien realisiert werden, beispielsweise als Hornantenne.

Die Hochpassfilter können ebenfalls auf verschiedene Weise realisiert sein. Mindestens einer der Hochpassfilter kann eine Kapazität sein oder umfassen, die mit einem der Photoleiter in Reihe geschaltet ist. Die Kapazität kann dabei beispielsweise durch eine dielektrische Schicht zwischen einer mit einem der Photoleiter verbundenen Leiterfläche und einer mit dem Antennenleiter verbundenen Leiterfläche realisiert sein. Diese Ausführungsform kann in vorteilhafter Weise auf einem optoelektronischen Chip integriert werden, sofern dieser als Bauform der Antenne verwendet wird.

Das ist jedoch nicht die einzige Möglichkeit. So kann auch - stattdessen oder zusätzlich - mindestens einer der Hochpassfilter eine Induktivität aufweisen, die zwischen einen der Photoleiter und ein Bezugspotential geschaltet ist. Die Induktivität kann dabei beispielsweise eine mäanderförmig angeordnete Leiterbahn sein. Auch diese Ausführungsform kann in vorteilhafter Weise auf einem optoelektronischen Chip integriert werden.

Die mehreren Photoleiter können an gleichwertigen Orten angeordnet sein, also so nahe beieinander liegen, dass an den Orten aller Photoleiter zumindest annähernd dasselbe elektrische Feld vorliegt. Dies ist gegeben, wenn der Abstand der Photoleiter kleiner als die kleinste zu detektierende Terahertzwellenlänge ist. Eine typische kleinste zu detektierende Terahertzwellenlänge kann beispielsweise 300 µm oder 50 µm betragen, was einer Bandbreite von 1 THz oder 5 THz entspricht. Der erste Photoleiter und der zweite Photoleiter können einen Abstand von weniger als 300 µm haben, vorzugsweise einen Abstand von weniger als 200 µm, weniger als 100 µm oder weniger als 50 µm.

Der vorgeschlagene Empfänger für Terahertzstrahlung, in dem eine Empfangsantenne beschriebener Art ihre Vorteile entfaltet, umfasst eine Empfangsantenne für Terahertzstrahlung gemäß der Erfindung und mindestens eine Lichtquelle, eingerichtet zum Erzeugen mindestens eines Lichtsignals zum Aktivieren des ersten Photoleiters und des mindestens einen zweiten Photoleiters der Empfangsantenne, wobei die mindestens eine Lichtquelle mit dem ersten Photoleiter und/oder dem mindestens einen zweiten Photoleiter der Empfangsantenne optisch gekoppelt ist zum Beaufschlagen des ersten Photoleiters und des zweiten Photoleiters mit Licht aus dem mindestens einen Lichtsignal.

Das mindestens eine Lichtsignal kann zeitlich, im Frequenzraum oder in der Phase moduliert sein. Beispielsweise kann es durch mindestens ein Schwebungssignal oder durch vorzugsweise mehrere Lichtpulse gegeben sein.

Der Empfänger kann weiterhin mindestens einen Strahlteiler umfassen, eingerichtet, um das von der Lichtquelle erzeugte Lichtsignal in einen ersten Anteil und einen zweiten Anteil aufzuteilen, wobei die Lichtquelle mit dem ersten Photoleiter und dem mindestens einen zweiten Photoleiter der Empfangsantenne optisch gekoppelt ist zum Beaufschlagen des ersten Photoleiters mit dem ersten Anteil des Lichtsignals und zum Beaufschlagen des zweiten Photoleiters mit dem zweiten Anteil des Lichtsignals, so dass der zweite Anteil des Lichtsignals den zweiten Photoleiter mit einer definierten Phasenverschiebung und/oder Laufzeitdifferenz gegenüber dem den ersten Photoleiter erreichenden ersten Anteil des Lichtsignals erreicht.

Die Photoleiter können also durch verschiedene Anteile desselben Lichtsignals, die durch mindestens einen Strahlteiler gebildet werde, aktiviert werden. Dieses Lichtsignal kann seinerseits als Schwebungssignal durch Überlagern mehrerer Lichtsignale mittels mindestens eines Kopplers gebildet werden, wobei es unerheblich ist, ob der oder die Koppler vor oder hinter dem oder den Strahlteilern angeordnet sind. Auch im letztgenannten Fall, wenn das Schwebungssignal erst nach der Aufteilung zweier Lichtsignale in jeweils zwei Anteile durch Überlagern jeweils eines der Anteile beider Lichtsignale mit jeweils einem von zwei Kopplern gebildet wird, seien die die zwei Koppler verlassenden Lichtsignale also als zwei Anteile desselben Lichtsignals, nämlich desselben Schwebungssignals, bezeichnet.

In manchen Ausführungsformen des Empfängers kann die mindestens eine Lichtquelle mittels eines planaren integrierten Wellenleiter-Chips mit dem Photoleiter verbunden sein. Das Material der Wellenleiter eines solchen Chips kann beispielsweise ein Polymer, ein Nitrid, ein Phosphid oder ein Glas sein. Ist dies der Fall, können auch die Lichtquelle, die Empfangsantenne und der integrierte Wellenleiter auf einem gemeinsamen Substrat angeordnet sein, wodurch eine robuste und kompakte Bauform erzielt wird. Die Ausführung als integrierter Wellenleiter hat den Vorteil, dass dadurch geringere Dimensionen der Lichtkopplung an die Photoleiter erzielt werden können als mit optischen Faser, was insbesondere bei Abständen der Photoleiter von weniger als 50 µm wichtig ist.

Die erwähnte Phasenverschiebung und/oder Laufzeitdifferenz der die Photoleiter erreichenden Anteile des Lichtsignals oder eine entsprechende Verschiebung zwischen mehreren Lichtsignalen, die zum Aktivieren der verschiedenen Photoleiter verwendet werden können, stellt sicher, dass auch die gleichzeitig abgetasteten Anteile der empfangenen Terahertzstrahlung bezüglich ihrer Phasenlage bzw. Zeitlage verschieden sind. Damit ist es möglich, die Amplitude und/oder Phase der empfangenen Terahertzstrahlung - auch gleichzeitig - ohne sequentielle Messungen zu bestimmen.

Dies ermöglicht es unter anderem, den beschriebenen Empfänger für das im Bereich der Kommunikationstechnik verbreitete In-Phase-Quadratur-Verfahren (IQ-Verfahren) zu verwenden, wodurch beispielsweise die Methode der Quadratur-Amplituden-Modulation (QAM) auch für Terahertzkommunikation erschlossen wird. Dies ist mit aus dem Stand der Technik bekannten Empfängern nicht möglich, da erst die hier vorgeschlagene Empfangsantenne die Möglichkeit bietet, zwei Komponenten des Signals gleichzeitig abzutasten. Bei der QAM-Kommunikation wird dem Signal senderseitig eine Information aufgeprägt, wobei sowohl die Amplitude als auch die Phase des Trägersignals moduliert werden. Dadurch lassen sich zur digitalen Kommunikation Symbole in einem zweidimensionalen Raster definieren. Die beiden Komponenten werden hierbei als In-Phase- Komponente und Quadratur-Komponente (I- und Q-Komponente) bezeichnet. Die I- und Q-Komponenten werden empfängerseitig aus zwei gleichzeitigen Messungen des Signals mit definierter Phasenverschiebung, typischerweise von 90° (π/2), bestimmt.

Die Phasenverschiebung und/oder Laufzeitdifferenz kann beispielsweise durch unterschiedlich lange optische Pfadlängen bei der optischen Kopplung der jeweiligen Lichtsignale oder Anteile des Lichtsignals an die Photoleiter realisiert werden. Dies kann durch unterschiedliche optische Faserlängen oder, im Fall der Ausführung als integriertem Wellenleiter-Chip, durch unterschiedliche Längen oder unterschiedliche Brechungsindizes der entsprechenden Wellenleiter verwirklicht werden.

Als Lichtquelle kann vorteilhaft eine Laserlichtquelle verwendet werden, wobei die Laserlichtquelle einen oder mehrere Laser, beispielsweise Diodenlaser enthalten kann.

Die mindestens eine Lichtquelle kann mindestens zwei gegeneinander verstimmte oder verstimmbare Dauerstrichlaser zum Erzeugen mindestens eines optischen Schwebungssignals und/oder einen Pulslaser zum Erzeugen von Lichtpulsen aufweisen.

Dabei ist die Erzeugung eines Schwebungssignals, welches dann in zwei Anteile mit bekannter Phasenverschiebung aufgeteilt wird, besonders vorteilhaft für die oben skizzierte Verwendung des Empfängers als IQ-Empfänger, beispielsweise in der Kommunikation. Auch in der Sensorik kann eine solche Verwendung des Empfängers zum Messen der Eigenschaften einer Probe vorteilhaft sein. Hierbei ist es manchmal von Interesse, die optische Dicke eines Objekts anhand von Phasenverschiebungen zu messen, die mehrere Phasenperioden umfassen können. Um diese eindeutig bestimmen zu können, wird im Stand der Technik die Terahertzfrequenz in einem bestimmten Bereich verstimmt. Der hier vorgeschlagene Empfänger kann auch diese Methode beschleunigen, indem mindestens zwei Schwebungssignale verschiedener Frequenz gleichzeitig erfasst werden.

Auch bei Verwendung eines Pulslasers ergeben sich vorteilhafte Anwendungen des Empfängers in der Sensorik. Bei solchen Anwendungen geht es beispielsweise um Laufzeitmessungen, etwa bei der Bestimmung der Dicke eines Objekts, bei der die Zeitlage von Reflexionen an Vorder- und Rückseite des Objekts bestimmt wird. Im Stand der Technik wird hierzu die Zeitlage des Abtastpulses über einen Bereich verstellt, der mindestens der einfachen oder doppelten optischen Dicke des Objekts entspricht, etwa mittels mechanischer Verzögerungsstrecken. Mit dem hier beschriebenen Empfänger können beispielsweise zwei Abtastpulse bereits in der erwarteten Zeitlage zueinander eingestellt werden, wodurch nur noch die Laufzeitdifferenz in einem wesentlich kleineren Bereich verstellt werden muss. Dies spart wiederum Zeit bei der Messung.

Der Empfänger kann weiterhin eine verstellbare optische Verzögerungseinheit aufweisen, dazu eingerichtet, die Phasenverschiebung und/oder Laufzeitdifferenz des zweiten Anteils des Lichtsignals am zweiten Photoleiter gegenüber dem ersten Anteil des Lichtsignals am ersten Photoleiter verstellbar zu machen.

Eine solche verstellbare Verzögerungseinheit kann beispielsweise als mechanische Verzögerungstrecke oder als elektrooptisches Element realisiert werden. Wie oben beschrieben ist eine verstellbare Verzögerungseinheit beispielsweise bei der Verwendung des Empfängers in der Sensorik vorteilhaft.

Der Empfänger kann eine Auswerteeinheit aufweisen, eingerichtet zum Auswerten eines ersten Messsignals, entsprechend dem durch den ersten Photoleiter fließenden Antennenstrom oder genauer einem niederfrequentem Anteil dieses Antennenstroms, und eines zweiten Messsignals, entsprechend dem durch den zweiten Photoleiter fließenden Antennenstrom oder genauer einem niederfrequentem Anteil dieses Antennenstroms, zum Bestimmen einer Amplitude und/oder einer Phasenlage einer empfangenen Terahertzstrahlung unter Verwendung der definierten Phasenverschiebung und/oder Laufzeitdifferenz.

Durch das Auswerten wird die in der Terahertzstrahlung enthaltene Information, die der Strahlung etwa durch den Sender oder eine Probe aufgeprägt sein kann, zur weiteren Verwendung bereitgestellt.

Die Messsignale können dabei durch Messen der Ströme durch die Photoleiter beispielsweise mittels Transimpedanzverstärkern (TIA) erzeugt werden. Solche TIAs sind als rauscharme Verstärker für kleine Ströme besonders geeignet; andere Strommessgeräte können ebenfalls verwendet werden.

Das vorgeschlagene Terahertzsystem, das einen Sender, eingerichtet zum Erzeugen von Terahertzstrahlung, und einen Empfänger für Terahertzstrahlung zuvor beschriebener Art, eingerichtet zum Empfangen der mittels des Senders erzeugten Terahertzstrahlung, umfasst, bildet eine vorteilhafte Anwendung des beschriebenen Empfängers bzw. der beschriebenen Empfangsantenne.

Durch das Zusammenspiel von Sender und Empfänger des Terahertzsystems können die oben skizzierten vorteilhaften Anwendungen realisiert werden. Dafür kann das System in verschiedener Weise anwendungsbezogen spezifiziert sein.

Der Sender kann einen Antennenleiter und ein lichtempfindliches Element aufweisen, das so mit dem Antennenleiter optisch gekoppelt ist, dass es in einem aktivierten Zustand und bei Anliegen einer Vorspannung einen durch den Antennenleiter und das lichtempfindliche Element fließenden Antennenstrom verursacht.

Damit können die bereits bekannten Vorteile einer photoleitenden Terahertz-Sendeantenne mit denen des hier beschriebenen photoleitenden Mehrkanal-Empfängers kombiniert werden.

Die mindestens eine Lichtquelle des Empfängers kann dann ferner optisch mit dem lichtempfindlichen Element des Senders gekoppelt sein, so dass das lichtempfindliche Elements des Senders durch einen weiteren Anteil des von der Lichtquelle erzeugten Lichtsignals aktivierbar ist.

Damit können Senden und Empfangen kohärent eingerichtet sein. Ein solches Terahertzsystem eignet sich besonders dazu, Messungen an einer Probe vorzunehmen, wobei die Probe zwischen dem Sender und dem Empfänger angeordnet wird und einer übertragenen Terahertzstrahlung Informationen aufprägt, welche nach entsprechender Auswertung Rückschlüsse auf Eigenschaften der Probe zulassen.

Unabhängig davon, wie der Sender aktiviert wird, kann der Sender einen Modulator aufweisen, der dazu eingerichtet ist, die durch den Sender erzeugte Terahertzstrahlung durch Phasenmodulation oder Amplitudenmodulation mit einer Information zu beaufschlagen. Dabei kann die Modulation vorteilhaft im optischen Bereich realisiert werden.

Die somit realisierte Ausführungsform eignet sich, besonders in Verbindung mit einem als IQ-Empfänger eingerichteten Empfänger, insbesondere zur Kommunikation. Dabei muss, sofern als Sender wie oben beschrieben ebenfalls eine photoleitende Antenne verwendet wird, das Anregungslicht für das lichtempfindliche Element des Senders nicht notwendigerweise von der selben Lichtquelle stammen wie das Anregungslicht für die Photoleiter der Empfangsantenne des Empfängers, da für die digitale Kommunikation mit QAM jeweils nur die Änderung des Signals zwischen diskreten Zuständen innerhalb bestimmter Zeitintervalle erfasst werden muss. Dazu genügt es, auf Sender- und Empfängerseite Anregungssignale mit im Wesentlichen gleicher Frequenz zu verwenden, so dass ausreichende Kohärenz der Lichtsignale in den relevanten Zeitintervallen gegeben ist.

Der Modulator kann dabei durch eine photoleitende Senderantenne in Verbindung mit einer verstellbaren optischen Verzögerungseinheit realisiert sein.

Ein Verfahren zum Erzeugen und Detektieren von Terahertzstrahlung unter Verwendung eines Terahertzsystems gemäß der Erfindung umfasst die Schritte:
Erzeugen eines Terahertzsignals mittels des Senders des Terahertzsystems;
Empfangen des mittels des Senders erzeugten Terahertzsignals mittels des Empfängers des Terahertzsystems, wobei das Empfangen die Schritte umfasst:
   Aktivieren des ersten Photoleiters der Empfangsantenne des Empfängers durch den ersten Anteil des von der mindestens einen Lichtquelle des Empfängers erzeugten Lichtsignals,
   Aktivieren des mindestens einen zweiten Photoleiters der Empfangsantenne des Empfängers durch den zweiten Anteil des von der mindestens einen Lichtquelle des Empfängers erzeugten Lichtsignals, gleichzeitiges Messen des ersten Messsignals, entsprechend dem durch den ersten Photoleiter fließenden Antennenstrom oder genauer einem niederfrequenten Anteil dieses Antennenstroms, und des zweiten Messsignals, entsprechend dem durch den zweiten Photoleiter fließenden Antennenstrom oder genauer einem niederfrequenten Anteil dieses Antennenstroms, während des Aktivierens des ersten Photoleiters und des zweiten Photoleiters;
und Bestimmen der Amplitude und/oder der Phase des empfangenen Terahertzsignals aus dem ersten Messsignal und dem zweiten Messsignal unter Verwendung der definierten Phasenverschiebung und/oder Laufzeitdifferenz zwischen dem ersten und dem zweiten Anteil des Lichtsignals.

Im letzten Schritt kann dabei zum Bestimmen der Amplitude und/oder der Phase die Auswerteeinheit des Empfängers verwendet werden. Mit dem vorgeschlagenen Verfahren wird es möglich, die oben beschriebenen Vorteile der Empfangsantenne, des Empfängers und des Terahertzsystems für Kommunikation oder Sensorik verfahrenmäßig nutzbar zu machen.

In manchen Beispielen des Verfahrens können der erste Anteil des von der mindestens einen Lichtquelle des Empfängers erzeugten Lichtsignals und der zweite Anteil des von der Lichtquelle des Empfängers erzeugten Lichtsignals optische Schwebungen oder Lichtpulse sein.

Bei der Verwendung von optischen Schwebungen eignet sich das Verfahren, wie oben ausgeführt, besonders für die Kommunikation mittels QAM oder für die Sensorik. Bei der Verwendung von Lichtpulsen eignet sich das Verfahren besonders für Laufzeitmessungen.

Weiterhin kann das vorgeschlagene Verfahren, sofern der Sender einen Modulator aufweist, die Schritte umfassen: Beaufschlagen des mittels des Senders des Terahertzsystems erzeugten Terahertzsignals mit einer Information durch Modulation der Phase und/oder der Amplitude des Terahertzsignals mittels des Modulators und Erfassen der Information, mit welcher das Terahertzsignal beaufschlagt ist

In dieser Form eignet sich das Verfahren besonders gut für die Kommunikation.

In einem solchen Verfahren kann weiterhin beim Beaufschlagen des mittels des Senders des Terahertzsystems erzeugten Terahertzsignals mit einer Information sowohl die Phase als auch die Amplitude des Terahertzsignals unter Verwendung von Quadraturamplitudenmodulation moduliert werden und beim Erfassen der Information, mit welcher das Terahertzsignal beaufschlagt ist, das erste Messsignal und das zweite Messsignal als In-Phase-Komponente und Quadratur-Komponente verwendet werden.

Das Verfahren eignet sich somit besonders gut für die digitale Kommunikation. In diesem Zusammenhang ermöglicht das Verfahren eine hohe Bandbreite und entsprechend eine hohe Datenübertragungsrate unter Ausnutzung eines Frequenzbereichs des elektromagnetischen Spektrums, der für solche Anwendungen noch wenig erschlossen ist.

Ein erfindungsgemäßes Verfahren kann ebenfalls weiterhin die Schritte umfassen: Anordnen einer Probe in einem Strahlengang zwischen dem Sender und dem Empfänger des Terahertzsystems, wobei ein Anteil des von dem Sender erzeugten Terahertzsignals durch Wechselwirken mit der Probe mit einer geänderten Phase und/oder Amplitude und/oder einer zweiten Laufzeitdifferenz beaufschlagt wird, Erfassen der durch Wechselwirken mit der Probe geänderten Phase und/oder Amplitude und/oder einer von der Probe verursachten zweiten Laufzeitdifferenz des von dem Empfänger empfangenen Terahertzsignals und Bestimmen einer Eigenschaft oder mehrerer Eigenschaften der Probe aus der so erfassten geänderten Phase und/oder Amplitude und/oder Frequenz und/oder zweiten Laufzeitdifferenz.

In dieser Form eröffnet das Verfahren die Möglichkeit, Eigenschaften der Probe, welche Terahertzmessungen zugänglich sind, besonders schnell und einfach zu bestimmen.

Ausführungsbeispiele der Erfindung werden nachfolgend anhand Fig. 1A bis Fig. 6 erläutert. Dabei zeigen, jeweils schematisch,
Fig. 1A eine Empfangsantenne für Terahertzstrahlung,
Fig. 1B eine Aufsicht und eine Seitenansicht einer Empfangsantenne der in Fig. 1A gezeigten Art, wobei diese als optoelektronischer Chip realisiert ist,
Fig. 2 eine Detailansicht eines Empfängers für Terahertzstrahlung mit einer Empfangsantenne der in Fig. 1B gezeigten Art,
Fig. 3 eine Skizze eines Funktionsprinzips eines IQ-Empfängers für Terahertzstrahlung mit einer Empfangsantenne gemäß Fig. 1A oder 1B,
Fig. 4 ein homodynes Terahertzsystem mit Dauerstrichlasern, das einen IQ-Empfänger der in Fig. 3 skizzierten Art aufweist,
Fig. 5 ein homodynes Terahertzsystem mit einem Pulslaser, das ein weiteres Beispiel eines Empfängers für Terahertzstrahlung mit einer Empfangsantenne der in Fig. 1A oder 1B gezeigten Art aufweist,
Fig. 6 ein heterodynes Terahertzsystem mit einem Empfänger wie in Fig. 4, aber mit einer anderen Ausführungsform eines Senders.

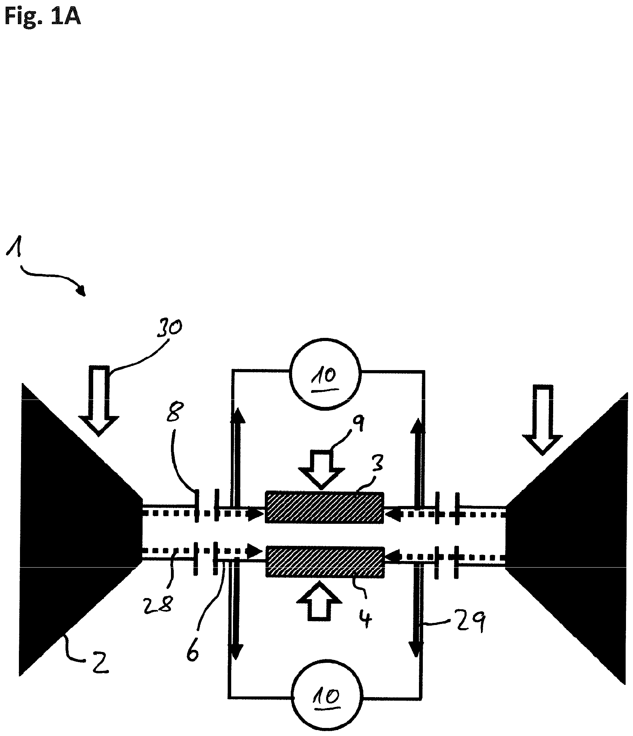

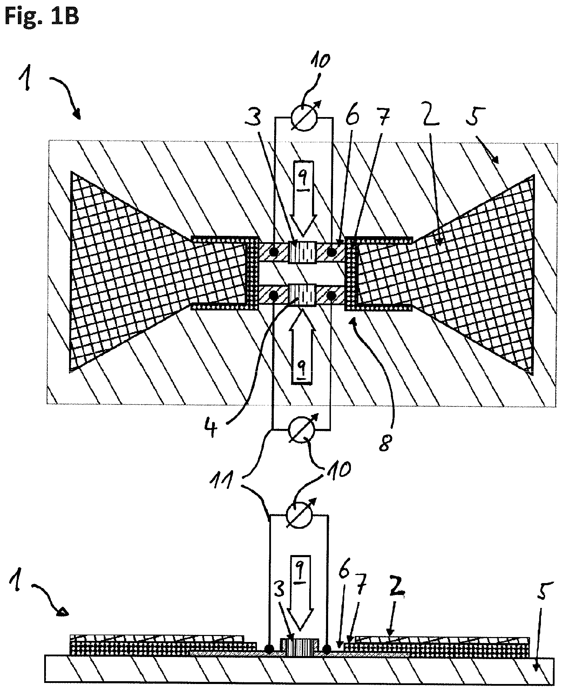

Die in Fig. 1A skizzierte Empfangsantenne 1 für Terahertzstrahlung 30 weist, wie auch das konkrete Ausführungsbeispiel aus Fig. 1B, einen zweigeteilten Antennenleiter 2 und einen mit dem Antennenleiter 2 verschalteten und durch Licht 9 aktivierbaren ersten Photoleiter 3 auf, der in einem aktivierten Zustand einen durch den Antennenleiter 2 und den ersten Photoleiter 3 fließenden Antennenstrom 28 ermöglicht.

Weiterhin weist die Empfangsantenne 1 einen ebenfalls mit dem Antennenleiter 2 verschalteten und durch Licht 9 aktivierbaren zweiten Photoleiter 4 auf, der mit dem ersten Photoleiter 3 parallel geschaltet ist und in einem aktivierten Zustand einen durch den Antennenleiter 2 und den zweiten Photoleiter 4 fließenden Antennenstrom 28 ermöglicht. Zwischen jeden der Photoleiter 3, 4 und jeden der beiden Teile des zweigeteilten Antennenleiter 2 ist mittels elektrischer Kontaktierungen 6 jeweils ein Hochpassfilter 8 geschaltet.

Mittels der Kontaktierungen 6 ist jeder der Photoleiter 3, 4 mit jeweils einem Messverstärker 10 verbunden. Die Kontaktierungen 6 ermöglichen es, mittels der Messverstärker 10 jeweils ein Messsignal, etwa einen niederfrequenten Anteil 29 des durch den jeweiligen Photoleiter 3, 4 fließenden Antennenstroms 28, abzunehmen.

Wiederkehrende Merkmale sind in den Figuren jeweils mit den gleichen Bezugszeichen versehen. Die in Fig. 1B gezeigte Empfangsantenne 1 ist als optoelektronischer Chip auf einem Substrat 5, bestehend aus InP oder GaAs, ausgeführt.

Auf dem Substrat 5 sind aufgebracht: der erste Photoleiter 3 und der zweite Photoleiter 4; die Kontaktierungen 6, die mit den Photoleitern 3 und 4 elektrisch verschaltet sind; der zweigeteilte Antennenleiter 2, ausgeführt als metallische Schicht und von den elektrischen Kontaktierungen 6 durch eine dielektrische Schicht 7 getrennt, wobei die dielektrische Schicht 7 zusammen mit einem darüber liegenden Teil des Antennenleiters 2 und jeweils einer der Kontaktierungen 6 jeweils einen Kondensator bildet, der als Hochpassfilter 8 zwischen dem Antennenleiter 2 und dem jeweiligen Photoleiter 3 oder 4 wirkt. Die beiden Photoleiter 3 und 4 sind in dieser Anordnung parallel geschaltet.

Die Kondensatoren, gebildet aus der dielektrischen Schicht 7, den Kontaktierungen 6 und dem Antennenleiter 2, sind dabei so dimensioniert, dass sich für den Hochpassfilter 8 eine Transmissionskante zwischen 50 GHz und 100 GHz ergibt.

Die Photoleiter 3 und 4 sind als epitaktische Schichten im Materialsystem In-Ga-Al-As-P realisiert. Der Abstand zwischen den Photoleitern 3 und 4 beträgt weniger als 50 µm. Die Photoleiter 3 und 4 sind durch Licht 9 (als Pfeile angedeutet) aktivierbar, wodurch in einem aktivierten Zustand jeweils ein durch den Antennenleiter 2 und einen aktivierten Photoleiter 3 oder 4 fließender Antennenstrom 28 ermöglicht wird. Die Photoleiter 3 und 4 sind dabei so angeordnet, dass zwischen Ihnen ein Abstand von weniger als 50 µm besteht, möglicherweise sogar weniger als 20 µm oder 10 µm.

Die Empfangsantenne 1 weist weiterhin zwei Messverstärker 10 auf, wobei jeder der Messverstärker über Zuleitungen 11 mit den Kontaktierungen 6 eines der Photoleiter 3 und 4 verbunden ist. Der mit dem ersten Photoleiter 3 verbundene Messverstärker 10 ist eingerichtet zum Erfassen eines ersten Messsignals, das dem niederfrequenten Anteil des durch den ersten Photoleiter 3 fließenden Antennenstroms entspricht; der mit dem zweiten Photoleiter 4 verbundene Messverstärker 10 ist eingerichtet zum Erfassen eines zweiten Messsignals, das dem niederfrequenten Anteil des durch den zweiten Photoleiter 4 fließenden Antennenstroms entspricht. Als Messverstärker werden Transimpedanzverstärker (TIAs) verwendet, die sich durch ihre gute Eignung zum Messen kleiner Ströme auszeichnen.

In einem weiteren Ausführungsbeispiel der Empfangsantenne 1 (nicht gezeigt), kann die dielektrische Schicht 7 entfallen, können die Kontaktierungen 6 also direkt mit dem Antennenleiter 2 elektrisch verschaltet sein. Die Hochpassfilter 8 können dann durch mäanderförmige Leiterbahnen als Induktivitäten realisiert sein, die von den Kontaktierungen 6 abzweigen und mit einem Bezugspotential verschaltet sind.

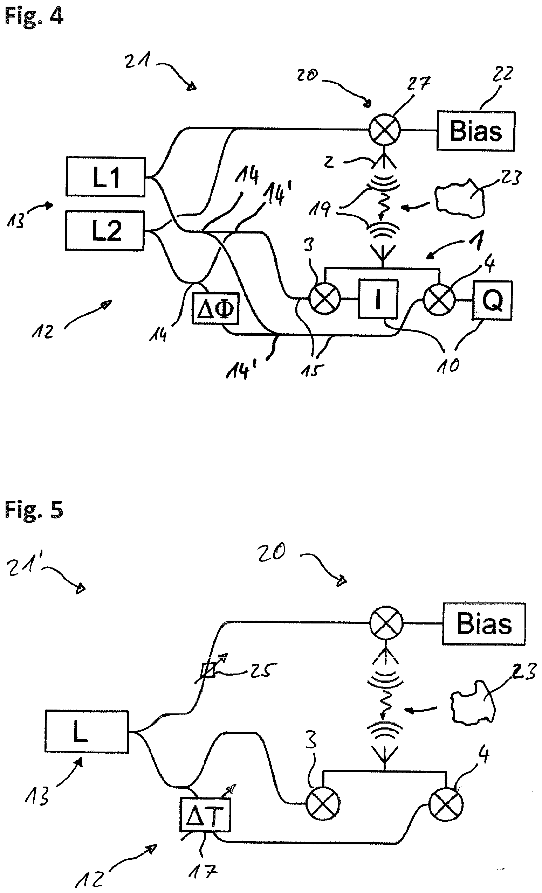

Eine Anwendung der Empfangsantenne aus Fig. 1A oder 1B ist in Fig. 4 zu sehen, die einen Empfänger 12 für Terahertzstrahlung im Kontext eines Terahertzsystems 21 zeigt. Der Empfänger 12 weist außer der Empfangsantenne 1 eine Lichtquelle 13, zwei Strahlteiler 14 und zwei Koppler 14' auf. Die Lichtquelle 13 ist zum Erzeugen eines Lichtsignals zum Aktivieren des ersten Photoleiters 3 und des zweiten Photoleiters 4 eingerichtet.

Die Lichtquelle 13 enthält zwei gleichartige Dauerstrichlaser L1 und L2, die gegeneinander so verstimmt oder verstimmbar sind, dass durch Kombinieren von Licht der beiden Laser L1 und L2 ein optisches Schwebungssignal erzeugt werden kann.

Die Dauerstrichlaser L1 und L2 sind dazu mit Strahlteilern 14 gekoppelt. Zur Aktivierung der Empfangsantenne vorgesehene Lichtanteile des von den Lasern L1 und L2 erzeugten Lichts werden zunächst mittels der Strahlteiler 14 in jeweils zwei Anteile aufgeteilt. Einer dieser Anteile wird mit einer Phasenverschiebung ΔΦ beaufschlagt. Mittels der Koppler 14' wird nun jeweils einer der auf den Laser L1 und einer der auf den Laser L2 zurückgehenden Anteile überlagert, wodurch zwei getrennte Anteile desselben mittels der beiden Laser L1 und L2 der Lichtquelle erzeugten Schwebungssignals gebildet werden.

Auf diese oder ähnliche Weise kann ein erster Anteil eines Lichtsignals dem ersten Photoleiter 3 und ein demgegenüber mit einer definierten Phasenverschiebung und/oder Laufzeitdifferenz beaufschlagter zweiter Anteil desselben Lichtsignals dem zweiten Photoleiter 4 zugeführt werden. Durch Wellenleiter 15 wird ein erster dieser Anteile des Schwebungssignals zum ersten Photoleiter 3 und ein zweiter dieser Anteile zum zweiten Photoleiter 4 geleitet.

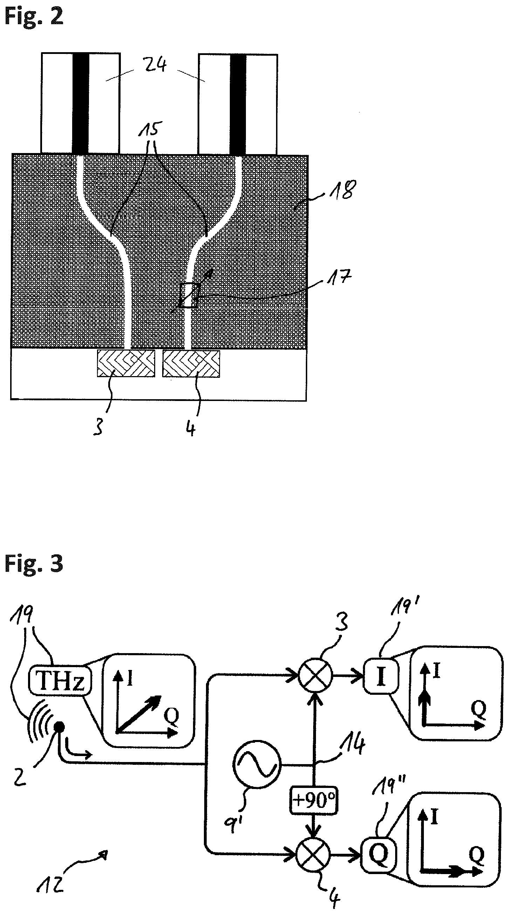

Wie in Fig. 2 gezeigt, können die Wellenleiter 15 dabei durch einen planaren integrierten Wellenleiter-Chip 18 realisiert sein. Die Anteile des Lichtsignals werden bei diesem Ausführungsbeispiel über optische Fasern 24 in die Wellenleiter 15 eingekoppelt. Derjenige Wellenleiter 15 oder diejenige optische Faser 24, der bzw. die den zweiten Anteil des Lichtsignals dem zweiten Photoleiter 4 zuführt, ist durch einen Längenunterschied gegenüber dem Wellenleiter 15 bzw. der optischen Faser 24, der bzw. die den ersten Anteil des Lichtsignals dem ersten Photoleiter 3 zuführt, dazu eingerichtet, den zweiten Anteil des Lichtsignals mit einer festen Phasenverschiebung von 90° zu beaufschlagen. Durch den integrierten Wellerleiter-Chip 18 kann die Dimension der Fasern 24 an die Dimension und den Abstand der Photoleiter 3 und 4 angepasst werden.

Der Empfänger 12 weist ferner einen digitalen Prozessor (nicht gezeigt) als Auswerteeinheit auf, welche die von den Messverstärkern 10 erfassten Messsignale auswertet und daraus - durch Ausnutzen der bekannten Phasenverschiebung - die Amplitude und die Phase der empfangenen Terahertzstrahlung bestimmt.

In dem in Fig. 2 gezeigten Beispiel ist der integrierte Wellenleiter-Chip 18 als separates Element ausgeführt. Stattdessen können die Wellenleiter 15 auch ebenso wie die Lichtquelle 13 auf dem Substrat 5 des optoelektronischen Chips der Empfangsantenne 1 integriert sein.

Außerdem kann der Empfänger 12, wie in Fig. 2 gezeigt, eine verstellbare optische Verzögerungseinheit 17 aufweisen, die in einen der Wellenleiter 15 integriert und dazu eingerichtet ist, den zweiten Anteil des Lichtsignals mit einer verstellbaren Phasenverschiebung zu beaufschlagen.

In einem weiteren Ausführungsbeispiel des Empfängers 12, das in Fig. 5 im Kontext eines weiteren Terahertzsystems 21' abgebildet ist, tritt an die Stelle der beiden Dauerstrichlaser L1 und L2 ein Pulslaser L, der zum Erzeugen eines optischen Lichtpulses eingerichtet ist. Dieser Empfänger 12 weist ebenfalls eine verstellbare optische Verzögerungseinheit 17 auf, wobei diese dazu eingerichtet ist, den zweiten Anteil des Lichtsignals mit einer verstellbaren Laufzeitdifferenz zu beaufschlagen.

Der in Fig. 4 als Bestandteil des Terahertzsystems 21 gezeigte Empfänger 12 kann - wie weiter oben beschrieben - als IQ-Empfänger verwendet werden. Das entsprechende Funktionsprinzip ist in Fig. 3 dargestellt. Der Antennenleiter 2 des Empfängers 12 ist, wie oben beschrieben, über die Hochpassfilter 8 (hier nicht gezeigt) mit dem ersten Photoleiter 3 und dem zweiten Photoleiter 4 verbunden. Diese werden durch das periodische Schwebungssignal 9' aktiviert, wobei der zweite Anteil des Schwebungssignals 9' gegenüber dem ersten Anteil eine Phasenverschiebung von 90° aufweist. Das in Fig. 1A und 1B veranschaulichte Licht 9 zum Anregen oder Aktivieren der Photoleiter 3 und 4 entspricht in diesem Fall den zwei Anteilen des Schwebungssignals 9'. Das bei gegebener Frequenz durch seine Phase und seine Amplitude bestimmte Terahertzsignal 19 kann - wie abgebildet - im Zeigerdiagramm in eine I-Komponente 19' und eine dazu orthogonale Q-Komponente 19" zerlegt werden. Aufgrund der Phasenverschiebung von 90° zwischen den beiden Anteilen des Schwebungssignals 9' können die durch die entsprechenden Photoleiter 3 und 4 fließenden Ströme mit den Komponenten 19' und 19" identifiziert werden, was die Bestimmung der Phase und Amplitude des Terahertzsignals 19 ermöglicht.

Das in Fig. 4 gezeigte Terahertzsystem 21 umfasst auch einen Sender 20, eingerichtet zum Erzeugen von Terahertzstrahlung, wobei der Empfänger 12 zum Empfangen von mittels des Senders 20 erzeugter Terahertzstrahlung eingerichtet ist.

Der Sender 20 weist einen Antennenleiter 2 und ein mit dem Antennenleiter 2 optisch gekoppeltes lichtempfindliches Element 27 auf, wobei das lichtempfindliche Element 27 in einem aktivierten Zustand und bei Anliegen einer Vorspannung einen durch den Antennenleiter 2 und das lichtempfindliche Element 27 fließenden Antennenstrom verursacht. Der Sender 20 gleicht somit in seinem Aufbau weitgehend dem Empfänger 12, wobei der Sender 20 nur ein lichtempfindliches Element 27 aufweist. Die Vorspannung wird von einer Spannungsquelle 22 geliefert.

Sender 20 und Empfänger 12 werden in diesem Ausführungsbeispiel ferner von derselben Lichtquelle 13 gespeist, d.h. die Lichtquelle 13 des Empfängers 12 ist optisch mit dem lichtempfindlichen Element 27 des Senders 20 gekoppelt und zum Erzeugen eines Lichtsignals zum Aktivieren des lichtempfindlichen Elements 27 des Senders 20 eingerichtet. Das Terahertzsystem 21 wird daher auch als homodynes System bezeichnet.

Empfängerseitig wird das optische Schwebungssignal 9' durch den Strahlteiler 14 in den ersten Anteil und den zweiten Anteil aufgeteilt, welche durch die Wellenleiter 15 zu den Photoleitern 3 und 4 geleitet werden, wobei der zweite Anteil beim Erreichen des zweiten Photoleiters 4 die Phasenverschiebung ΔΦ gegenüber dem ersten Anteil beim Erreichen des ersten Photoleiters 3 aufweist.

Das Terahertzsystem 21 ermöglicht ein Verfahren zum Erzeugen und Detektieren von Terahertzstrahlung unter Verwendung des Terahertzsystems 21. Hierbei wird mittels des Senders 20 ein Terahertzsignal 19 erzeugt. Dazu wird an den Antennenleiter 2 des Senders 20 mittels der Spannungsquelle 22 eine Vorspannung angelegt. Das lichtempfindliche Element 27 des Senders 20 wird durch das von der Lichtquelle 13 erzeugte Lichtsignal aktiviert, wodurch ein Antennenstrom als Wechselstrom mit der Periode des Schwebungssignals durch das lichtempfindliche Element 27 fließt, was das Abstrahlen des Terahertzsignals 19 durch den Antennenleiter 2 zur Folge hat.

Das mittels des Senders 20 erzeugte Terahertzsignal 19 wird mittels des Empfängers 12 empfangen. Dazu wird der erste Photoleiter 3 der Empfangsantenne 1 des Empfängers 12 durch den ersten Anteil des von der Lichtquelle 13 des Empfängers 12 erzeugten Lichtsignals aktiviert. Der zweite Photoleiter 4 der Empfangsantenne 2 des Empfängers 12 wird durch den zweiten Anteil des von der Lichtquelle 13 des Empfängers 12 erzeugten Lichtsignals aktiviert, wobei der zweite Anteil gegenüber dem ersten Anteil eine Phasenverschiebung ΔΦ von 90° aufweist. Gleichzeitig mit dem Aktivieren der Photoleiter 3 und 4 wird mittels der Messverstärker 10 das erste Messsignal, entsprechend dem niederfrequenten Anteil des durch den ersten Photoleiter 3 fließenden Antennenstroms, und das zweite Messsignal, entsprechend dem niederfrequenten Anteil des durch den zweiten Photoleiter 4 fließenden Antennenstroms, gemessen.

Durch Ausnutzen der bekannten Phasenverschiebung ΔΦ wird unter Verwendung der Auswerteeinheit die Amplitude und Phase des empfangenen Terahertzsignals 19 aus dem ersten Messsignal und dem zweiten Messsignal bestimmt.

Eine beispielhafte Anwendung des beschriebenen Verfahrens eignet sich besonders zur Untersuchung einer Probe 23. Die Probe 23 wird hierbei in einem Strahlengang zwischen dem Sender 20 und dem Empfänger 12 angeordnet (in Fig. 4 durch Pfeil angedeutet). Ein Anteil des von dem Sender 20 erzeugten Terahertzsignals 19 wird durch Wechselwirken mit der Probe 23 mit einer geänderten Phase und/oder Amplitude beaufschlagt.

Die durch Wechselwirken mit der Probe 23 geänderte Phase/und oder Amplitude des Terahertzsignals 19 wird durch die Auswerteeinheit erfasst. Aus der so erfassten Phase und/oder Amplitude wird eine Eigenschaft oder mehrere Eigenschaften der Probe 23 bestimmt. Je nach Anordnung der Probe 23 kann dabei von der Probe 23 transmittierte oder reflektierte Terahertzstrahlung detektiert werden.

Das in Fig. 5 gezeigte Terahertzsystem 21' entspricht in seinem Aufbau in weiten Teilen dem Terahertzsystem 21 in Fig. 4. Daher werden hier nur die Unterscheidungsmerkmale gegenüber dem Terahertzsystem 21 aus Fig. 4 beschrieben. Auch dieses Terahertzsystem 21' ist ein homodynes System, bei dem also Sender 20 und Empfänger 12 von derselben Lichtquelle 13 gespeist werden. Anstelle der beiden Dauerstrichlaser L1 und L2 weist die Lichtquelle 13 des Empfängers 12 hier den Pulslaser L auf, der zum Erzeugen optischer Lichtpulse eingerichtet ist. Der zweite Anteil des Lichtpulses weist beim Erreichen des zweiten Photoleiters 4 die Laufzeitdifferenz ΔT gegenüber dem ersten Anteil beim Erreichen des ersten Photoleiters 3 auf.

Zusätzlich ist zwischen die Lichtquelle 13 und das lichtempfindliche Element 27 des Senders 20 eine zweite verstellbare optische Verzögerungseinheit 25 optisch geschaltet, welche eine Einstellung der relativen Zeitlage der Sende- und Abtastpulse erlaubt.

Das Terahertzsystem 21' nach Fig. 5 eignet sich für ein weiteres Beispiel des oben beschriebenen Verfahrens. Auch in diesem Beispiels wird eine Probe 23 in einem Strahlengang zwischen dem Sender 20 und dem Empfänger 12 angeordnet (durch Pfeil angedeutet). Die Probe 23 kann dabei so angeordnet sein, dass den Empfänger 12 ein transmittierter Anteil des Terahertzsignals 19 trifft, aber auch so, dass den Empfänger 12 mindestens ein reflektierter Anteil des Terahertzsignals 19 trifft, wobei wenigstens ein Anteil des Terahertzsignals 19, der den Empfänger 12 trifft, durch Wechselwirken mit der Probe 23 mit einer zweiten Laufzeitdifferenz beaufschlagt wird.

Die zweite Laufzeitdifferenz wird durch die Auswerteeinheit erfasst, wozu in manchen Verfahrensformen die verstellbare optische Verzögerungseinheit 17 und/oder die zweite verstellbare optische Verzögerungseinheit 25 verstellt wird. Aus der so erfassten zweiten Laufzeitdifferenz und/oder einer Abschwächung der Terahertzstrahlung durch die Probe 23 wird eine Eigenschaft oder mehrere Eigenschaften der Probe 23 bestimmt, beispielsweise eine Dicke.

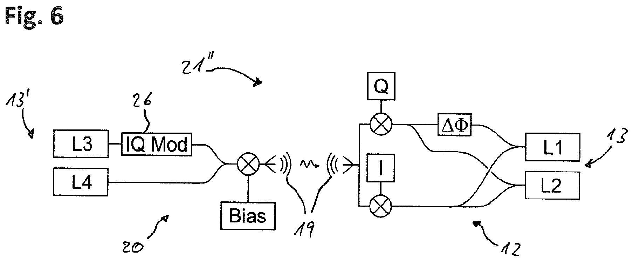

Fig. 6 zeigt ein weiteres Terahertzsystem 21", ausgeführt als heterodynes System, bei dem also Sender 20 und Empfänger 12 von unterschiedlichen Lichtquellen 13' und 13 gespeist werden. Der Empfänger 12, der von der Lichtquelle 13 gespeist wird, ist hierbei vollständig analog zu dem Empfänger 12 in Fig. 4, auf deren Beschreibung daher verwiesen wird. Der Sender 20 wird bei dem Terahertzsystem von der Lichtquelle 13' gespeist, wobei die Lichtquelle 13' zwei gleichartige Dauerstrichlaser L3 und L4, aufweist, die gegeneinander so verstimmt sind, dass durch Kombinieren von Lichtsignalen der beiden Laser L3 und L4 ein optisches Schwebungssignal erzeugt werden kann, wobei die Schwebungsfrequenz der Frequenz der durch Kombinieren der beiden Laser L1 und L2 erzeugten Schwebung identisch ist.

Die Schwebungsfrequenz des durch Kombinieren der Lichtsignale der beiden Laser L3 und L4 erzeugten optischen Schwebungssignals muss jedoch nicht gleich der Schwebungsfrequenz des durch Kombinieren der Lichtsignale der beiden Laser L1 und L2 erzeugten optischen Schwebungssignals sein. Es können auch zwei Schwebungssignale unterschiedlicher Schwebungsfrequenz verwendet werden. Die Differenz der beiden Schwebungsfrequenzen oder - bei zusätzlicher Modulation - die Summe aus der genannten Differenz und der Modulationsfrequenz - sollte in diesem Fall jedoch geringer sein als die Transmissionskante der Hochpassfilter.

Der Sender 20 weist weiterhin einen Modulator 26 auf, der dazu eingerichtet ist, eine erzeugte Terahertzstrahlung durch Phasenmodulation und/oder Amplitudenmodulation mit einer Information zu beaufschlagen. Dazu ist der Modulator 26 als verstellbare optische Verzögerungseinheit ausgeführt, welche das von dem Laser L3 erzeugte Lichtsignal vor dem Kombinieren mit dem von dem Laser L4 erzeugten Lichtsignal mit einer verstellbaren Phasendifferenz beaufschlagt. Zusätzlich oder alternativ kann der Modulator 26 auch zum Modulieren der Amplitude der erzeugten Terahertzstrahlung eingerichtet sein, beispielsweise durch Modulieren der Laserleistung der Laser L3 und L4.

Ein weiteres Beispiel des oben anhand von Fig. 4 beschriebenen Verfahrens wird vorteilhaft unter Verwendung des in Fig. 6 gezeigten heterodynen Terahertzsystems 21" möglich, wobei sich dieses Verfahren besonders zur Kommunikation eignet. Hierbei wird das beschriebene Verfahren dadurch abgewandelt, dass das mittels des Senders 20 des Terahertzsystems 21" erzeugte Terahertzsignal 19 mit einer Information durch Modulation der Phase und/oder der Amplitude des Terahertzsignals 19 mittels des Modulators 26 beaufschlagt wird und dass die Information, mit welcher das Terahertzsignal 19 beaufschlagt wird, erfasst wird.

Eine besondere Ausführung dieses Verfahrens ist speziell für die Kommunikation mittels des oben beschriebenen IQ-Verfahrens eingerichtet. Hierbei wird beim Beaufschlagen des mittels des Senders 20 des Terahertzsystems 21" erzeugten Terahertzsignals 19 mit einer Information sowohl die Phase als auch die Amplitude des Terahertzsignals 19 unter Verwendung von Quadraturamplitudenmodulation moduliert; beim Erfassen der Information, mit welcher das Terahertzsignal 19 beaufschlagt ist, werden das erste Messsignal und das zweite Messsignal als In-Phase-Komponente und Quadratur-Komponente verwendet.

### Liste der Bezugszeichen

- 1: Empfangsantenne
- 2: Antennenleiter
- 3: Erster Photoleiter
- 4: Zweiter Photoleiter
- 5: Substrat
- 6: Kontaktierung
- 7: Dielektrische Schicht
- 8: Hochpassfilter
- 9: Licht
- 9': Schwebungssignal
- 10: Messverstärker
- 11: Zuleitungen
- 12: Empfänger
- 13: Lichtquelle
- 14: Strahlteiler
- 14': Koppler
- 15: Wellenleiter
- 17: Verstellbare optische Verzögerungseinheit
- L1, L2: Dauerstrichlaser
- L: Pulslaser
- 18: Integrierter Wellenleiter-Chip
- 19: Terahertzsignal
- 19': I-Komponente
- 19": Q-Komponente
- 20: Sender
- 21, 21', 21": Terahertzsystem
- 22: Spannungsquelle
- 23: Probe
- 24: Optische Fasern
- 25: Zweite verstellbare optische Verzögerungseinheit
- 26: Modulator
- 27: Lichtempfindliches Element
- 28: Antennenstrom
- 29: Niederfrequenter Anteil
- 30: Terahertzstrahlung

## Patentansprüche

1. Empfangsantenne (1) für Terahertzstrahlung (30), umfassend
einen Antennenleiter (2) und
einen mit dem Antennenleiter (2) verschalteten und durch Licht (9) aktivierbaren ersten Photoleiter (3), der in einem aktivierten Zustand einen durch den Antennenleiter (2) und den ersten Photoleiter (3) fließenden Antennenstrom (28) ermöglicht,
**dadurch gekennzeichnet,**
**dass** die Empfangsantenne (1) mindestens einen ebenfalls mit dem Antennenleiter (2) verschalteten und durch Licht (9) aktivierbaren zweiten Photoleiter (4) aufweist, der mit dem ersten Photoleiter (3) parallel geschaltet ist und in einem aktivierten Zustand einen durch den Antennenleiter (2) und den zweiten Photoleiter (4) fließenden Antennenstrom (28) ermöglicht,
wobei zwischen jeden der Photoleiter (3, 4) und den Antennenleiter (2) jeweils mindestens ein Hochpassfilter (8) geschaltet ist.

2. Empfangsantenne (1) nach Anspruch 1, wobei zwischen jeden der Photoleiter (3, 4) und dem mindestens einen Hochpassfilter (8), der zwischen diesen Photoleiter (3, 4) und den Antennenleiter (2) geschaltet ist, jeweils eine Kontaktierung zur Abnahme eines Messsignals vorgesehen ist.

3. Empfangsantenne (1) nach einem der vorhergehenden Ansprüche, wobei mindestens einer der Hochpassfilter (8) eine Kapazität ist oder umfasst, die mit einem der Photoleiter (3, 4) in Reihe geschaltet ist, und/oder wobei mindestens einer der Hochpassfilter (8) eine Induktivität aufweist, die zwischen einen der Photoleiter (3, 4) und ein Bezugspotential geschaltet ist.

4. Empfangsantenne (1) nach einem der vorhergehenden Ansprüche, wobei mindestens einer der Hochpassfilter (8) eine Transmissionskante zwischen 50 GHz und 100 GHz aufweist und/oder wobei der erste Photoleiter (3) und der zweite Photoleiter (4) einen Abstand von weniger als 300 µm haben.

5. Empfänger (12) für Terahertzstrahlung (30), umfassend
eine Empfangsantenne (1) für Terahertzstrahlung (30) nach einem der Ansprüche 1 bis 4 und
mindestens eine Lichtquelle (13), eingerichtet zum Erzeugen mindestens eines Lichtsignals zum Aktivieren des ersten Photoleiters (3) und des mindestens einen zweiten Photoleiters (4) der Empfangsantenne (1),
wobei die mindestens eine Lichtquelle (13) mit dem ersten Photoleiter (3) und/oder dem mindestens einen zweiten Photoleiter (4) der Empfangsantenne (1) optisch gekoppelt ist zum Beaufschlagen des ersten Photoleiters (3) und des zweiten Photoleiters (4) mit Licht (9) aus dem mindestens einen Lichtsignal.

6. Empfänger (12) nach Anspruch 5, umfassend mindestens einen Strahlteiler (14), eingerichtet, um das von der Lichtquelle (13) erzeugte Lichtsignal in einen ersten Anteil und einen zweiten Anteil aufzuteilen, wobei die Lichtquelle (13) mit dem ersten Photoleiter (3) und dem mindestens einen zweiten Photoleiter (4) der Empfangsantenne (1) optisch gekoppelt ist zum Beaufschlagen des ersten Photoleiters (3) mit dem ersten Anteil des Lichtsignals und zum Beaufschlagen des zweiten Photoleiters (4) mit dem zweiten Anteil des Lichtsignals, so dass der zweite Anteil des Lichtsignals den zweiten Photoleiter (4) mit einer definierten Phasenverschiebung und/oder Laufzeitdifferenz gegenüber dem den ersten Photoleiter (3) erreichenden ersten Anteil des Lichtsignals erreicht.

7. Empfänger (12) nach Anspruch 6, weiterhin aufweisend eine verstellbare optische Verzögerungseinheit (17), dazu eingerichtet, die Phasenverschiebung und/oder Laufzeitdifferenz des zweiten Anteils des Lichtsignals am zweiten Photoleiter (4) gegenüber dem ersten Anteil des Lichtsignals am ersten Photoleiter (3) verstellbar zu machen.

8. Empfänger (12) nach einem der Ansprüche 5 bis 7, wobei die mindestens eine Lichtquelle (13) mindestens zwei gegeneinander verstimmte oder verstimmbare Dauerstrichlaser (L1, L2) zum Erzeugen mindestens eines optischen Schwebungssignals und/oder einen Pulslaser (L) zum Erzeugen von Lichtpulsen aufweist.

9. Empfänger (12) nach einem der Ansprüche 5 bis 8, weiterhin aufweisend eine Auswerteeinheit, eingerichtet zum Auswerten eines ersten Messsignals, entsprechend einem niederfrequenten Anteil (29) des durch den ersten Photoleiter (3) fließenden Antennenstroms (28), und eines zweiten Messsignals, entsprechend einem niederfrequenten Anteil (29) des durch den zweiten Photoleiter (4) fließenden Antennenstroms (28), zum Bestimmen einer Amplitude und/oder einer Phasenlage einer empfangenen Terahertzstrahlung (30) unter Verwendung einer definierten Phasenverschiebung und/oder Laufzeitdifferenz.

10. Terahertzsystem (21), umfassend
einen Sender (20), eingerichtet zum Erzeugen von Terahertzstrahlung (30), und
einen Empfänger (12) für Terahertzstrahlung (30) nach einem der Ansprüche 5 bis 9, eingerichtet zum Empfangen der mittels des Senders (29) erzeugten Terahertzstrahlung (30).

11. Terahertzsystem (21) nach Anspruch 10,
wobei der Sender (20) einen Antennenleiter (2) und ein lichtempfindliches Element (27) aufweist, das so mit dem Antennenleiter (2) optisch gekoppelt ist, dass es in einem aktivierten Zustand und bei Anliegen einer Vorspannung einen durch den Antennenleiter (2) und das lichtempfindliche Element (27) fließenden Antennenstrom (28) verursacht.

12. Terahertzsystem (21) nach Anspruch 11,
wobei die mindestens eine Lichtquelle (13) des Empfängers (12) ferner optisch mit dem lichtempfindlichen Element (27) des Senders (20) gekoppelt ist, so dass das lichtempfindliche Elements (27) des Senders (20) durch einen Anteil des von der Lichtquelle (13) erzeugten Lichtsignals aktivierbar ist.

13. Terahertzsystem (21) nach einem der Ansprüche 10 bis 12,
wobei der Sender (20) einen Modulator (26) aufweist, der dazu eingerichtet ist, die durch den Sender (20) erzeugte Terahertzstrahlung (30) durch Phasenmodulation und/oder Amplitudenmodulation mit einer Information zu beaufschlagen.

14. Verfahren zum Erzeugen und Detektieren von Terahertzstrahlung (30) unter Verwendung eines Terahertzsystems (21) nach einem der Ansprüche 10 bis 13, sofern diese auf Anspruch 6 rückbezogen sind, umfassend die Schritte:
Erzeugen eines Terahertzsignals (19) mittels des Senders (20) des Terahertzsystems (21);
Empfangen des mittels des Senders (20) erzeugten Terahertzsignals (19) mittels des Empfängers (12) des Terahertzsystems (21), wobei das Empfangen die Schritte umfasst:
Aktivieren des ersten Photoleiters (3) der Empfangsantenne (1) des Empfängers (12) durch den ersten Anteil des von der mindestens einen Lichtquelle (13) des Empfängers (12) erzeugten Lichtsignals,
Aktivieren des mindestens einen zweiten Photoleiters (4) der Empfangsantenne (1) des Empfängers (12) durch den zweiten Anteil des von der mindestens einen Lichtquelle (13) des Empfängers (12) erzeugten Lichtsignals,
gleichzeitiges Messen eines ersten Messsignals, entsprechend einem niederfrequenten Anteil (29) des durch den ersten Photoleiter (3) fließenden Antennenstroms (28), und eines zweiten Messsignals, entsprechend einem niederfrequenten Anteil (29) des durch den zweiten Photoleiter (4) fließenden Antennenstroms (28), während des Aktivierens des ersten Photoleiters (3) und des zweiten Photoleiters (4);
und
Bestimmen der Amplitude und/oder der Phase des empfangenen Terahertzsignals (19) aus dem ersten Messsignal und dem zweiten Messsignal unter Verwendung der definierten Phasenverschiebung und/oder Laufzeitdifferenz zwischen dem ersten und dem zweiten Anteil des Lichtsignals.

15. Verfahren nach Anspruch 14, sofern dieser auf Anspruch 13 rückbezogen ist, weiterhin umfassend die Schritte
Beaufschlagen des mittels des Senders (20) des Terahertzsystems (21) erzeugten Terahertzsignals (19) mit einer Information durch Modulation der Phase und/oder der Amplitude des Terahertzsignals (19) mittels des Modulators (26) und
Erfassen der Information, mit welcher das Terahertzsignal (19) beaufschlagt ist.

16. Verfahren nach Anspruch 15,
wobei beim Beaufschlagen des mittels des Senders (20) des Terahertzsystems (21) erzeugten Terahertzsignals (19) mit einer Information sowohl die Phase als auch die Amplitude des Terahertzsignals (19) unter Verwendung von Quadraturamplitudenmodulation moduliert werden und
beim Erfassen der Information, mit welcher das Terahertzsignal (19) beaufschlagt ist, das erste Messsignal und das zweite Messsignal als In-Phase-Komponente und Quadratur-Komponente verwendet werden.

17. Verfahren nach einem der Ansprüche 14 bis 16, weiterhin umfassend die Schritte
Anordnen einer Probe (23) in einem Strahlengang zwischen dem Sender (20) und dem Empfänger (12) des Terahertzsystems (21), wobei ein Anteil des von dem Sender (20) erzeugten Terahertzsignals (19) durch Wechselwirken mit der Probe (23) mit einer geänderten Phase und/oder Amplitude und/oder einer zweiten Laufzeitdifferenz beaufschlagt wird,
Erfassen der durch Wechselwirken mit der Probe (23) geänderten Phase und/oder Amplitude und/oder einer von der Probe verursachten zweiten Laufzeitdifferenz des von dem Empfänger (12) empfangenen Terahertzsignals (19) und
Bestimmen einer Eigenschaft oder mehrerer Eigenschaften der Probe (23) aus der so erfassten geänderten Phase und/oder Amplitude und/oder Frequenz und/oder zweiten Laufzeitdifferenz.

## Claims

1. A receiving antenna (1) for terahertz radiation (30) comprising
an antenna conductor (2) and
a first photoconductor (3), which is connected to the antenna conductor (2), is activatable by light (9), and in an activated state allows an antenna current (28) flowing through the antenna conductor (2) and the first photoconductor (3),
**characterised in that**
the receiving antenna (1) has at least one second photoconductor (4), which is likewise connected to the antenna conductor (2), is activatable by light (9), is connected in parallel with the first photoconductor (3), and in an activated state allows an antenna current (28) flowing through the antenna conductor (2) and the second photoconductor (4),
wherein at least one high-pass filter (8) is between each of the photoconductors (3, 4) and the antenna conductor (2).

2. The receiving antenna (1) according to claim 1, wherein, to pick up a measurement signal, a contact-making means is provided between each of the photoconductors (3, 4) and the at least one high-pass filter (8) which is connected between these photoconductors (3, 4) and the antenna conductor (2)

3. The receiving antenna (1) according to one of the preceding claims, wherein at least one of the high-pass filters (8) is a capacitor or comprises a capacitor which is connected in series with one of the photoconductors (3, 4), and/or wherein at least one of the high-pass filters (8) has an inductor which is connected between one of the photoconductors (3, 4) and a reference potential.

4. The receiving antenna (1) according to one of the preceding claims, wherein at least one of the high-pass filters (8) has a transmission edge between 50 GHz and 100 GHz, and/or wherein the first photoconductor (3) and the second photoconductor (4) have a distance of less than 300 µm.

5. A receiver (12) for terahertz radiation (30) comprising
a receiving antenna (1) for terahertz radiation (30) according to one of claims 1 to 4 and
at least one light source (13), configured to generate at least one light signal to activate the first photoconductor (3) and the at least one second photoconductor (4) of the receiving antenna (1),
wherein the at least one light source (13) is optically coupled with the first photoconductor (3) and/or the at least one second photoconductor (4) of the receiving antenna (1) to apply light (9) from the at least one light signal to the first photoconductor (3) and the second photoconductor (4).

6. The receiver (12) according to claim 5, comprising at least one beam splitter (14) configured to split the light signal generated by the light source (13) into a first component and a second component, wherein the light source (13) is optically coupled with the first photoconductor (3) and the at least one second photoconductor (4) of the receiving antenna (1) to apply the first component of the light signal to the first photoconductor (3) and to apply the second component of the light signal to the second photoconductor (4) so that the second component of the light signal reaches the second photoconductor (4) with a defined phase shift and/or transit time difference in relation to the first component of the light signal reaching the first photoconductor (3).

7. The receiver (12) according to claim 6, further having an adjustable optical delay unit (17) configured to make adjustable the phase shift and/or transit time difference of the second component of the light signal at the second photoconductor (4) in relation to the first component of the light signal at the first photoconductor (3).

8. The receiver (12) according to one of claims 5 to 7, wherein the at least one light source (13) has at least two continuous-wave lasers (L1, L2) that are detuned or can be detuned to generate at least one optical beat signal and/or has a pulsed laser (L) to generate light pulses.

9. The receiver (12) according to one of claims 5 to 8, further having an evaluation unit configured to evaluate a first measurement signal, corresponding to a low-frequency component (29) of the antenna current (28) flowing through the first photoconductor (3), and a second measurement signal, corresponding to a low-frequency component (29) of the antenna current (28) flowing through the second photoconductor (4), to determine an amplitude and/or a phase position of a received terahertz radiation (30) with use of a defined phase shift and/or transit time difference.

10. A terahertz system (21) comprising
a transmitter (20) configured to generate terahertz radiation (30) and
a receiver (12) for terahertz radiation (30) according to one of claims 5 to 9, configured to receive the terahertz radiation (30) generated by means of the transmitter (29).

11. The terahertz system (21) according to claim 10,
wherein the transmitter (20) has an antenna conductor (2) and a light-sensitive element (27) which is optically coupled to the antenna conductor (2) such that it, in an activated state and under application of a bias, causes an antenna current (28) flowing through the antenna conductor (2) and the light-sensitive element (27).

12. The terahertz system (21) according to claim 11,
wherein the at least one light source (13) of the receiver (12) is also optically coupled to the light-sensitive element (27) of the transmitter (20) so that the light-sensitive element (27) of the transmitter (20) is activatable by a component of the light signal generated by the light source (13).

13. The terahertz system (21) according to one of claims 10 to 12,
wherein the transmitter (20) has a modulator (26) which is configured to apply information, by phase modulation and/or amplitude modulation, to the terahertz radiation (30) generated by the transmitter (20).

14. A method for generating and detecting terahertz radiation (30) with use of a terahertz system (21) according to one of claims 10 to 13, insofar as these refer back to claim 6, comprising the steps of:
generating a terahertz signal (19) by means of the transmitter (20) of the terahertz system (21);
receiving the terahertz signal (19) generated by means of the transmitter (20) by means of the receiver (12) of the terahertz system (21), wherein the reception comprises the steps of:
activating the first photoconductor (3) of the receiving antenna (1) of the receiver (12) by the first component of the light signal generated by the at least one light source (13) of the receiver (12),
activating the at least one second photoconductor (4) of the receiving antenna (1) of the receiver (12) by the second component of the light signal generated by the at least one light source (13) of the receiver (12),
simultaneously measuring a first measurement signal, corresponding to a low-frequency component (29) of the antenna current (28) flowing through the first photoconductor (3), and a second measurement signal, corresponding to a low-frequency component (29) of the antenna current (28) flowing through the second photoconductor (4), during the activation of the first photoconductor (3) and the second photoconductor (4);
and
determining the amplitude and/or the phase of the received terahertz signal (19) from the first measurement signal and the second measurement signal with use of the defined phase shift and/or transit time difference between the first and the second component of the light signal.

15. The method according to claim 14, insofar as this refers back to claim 13, further comprising the steps of
applying information to the terahertz signal (19), generated by means of the transmitter (20) of the terahertz system (21), by modulation of the phase and/or the amplitude of the terahertz signal (19) by means of the modulator (26) and
detecting the information applied to the terahertz signal (19).

16. The method according to claim 15,
wherein, when applying information to the terahertz signal (19) generated by means of the transmitter (20) of the terahertz system (21), both the phase and the amplitude of the terahertz signal (19) are modulated with use of quadrature amplitude modulation and
when detecting the information applied to the terahertz signal (19), the first measurement signal and the second measurement signal are used as in-phase component and quadrature component.

17. The method according to one of claims 14 to 16, further comprising the steps of
arranging a sample (23) in a beam path between the transmitter (20) and the receiver (12) of the terahertz system (21), wherein, by interaction with the sample (23), an altered phase and/or amplitude and/or a second transit time difference is applied to a component of the terahertz signal (19) generated by the transmitter (20),
detecting the phase and/or amplitude altered by interaction with the sample (23) and/or a second transit time difference, caused by the sample, of the terahertz signal (19) received by the receiver (12), and
determining a property or plurality of properties of the sample (23) from the thus detected altered phase and/or amplitude and/or frequency and/or second transit time difference.

## Revendications

1. Antenne de réception (1) de rayonnement térahertzien (30), comprenant
un conducteur d'antenne (2) et
un premier photoconducteur (3) connecté avec le conducteur d'antenne (2) et activable par de la lumière (9), qui permet, dans un état activé, à un courant d'antenne (28) de traverser le conducteur d'antenne (2) et le premier photoconducteur (3),
**caractérisée en ce**
**que** l'antenne de réception (1) présente au moins un deuxième photoconducteur (4) également connecté avec le conducteur d'antenne (2) et activable par la lumière (9), qui est connecté en parallèle avec le premier photoconducteur (3) et permet, dans un état activé, à un courant d'antenne (28) de traverser le conducteur d'antenne (2) et le deuxième photoconducteur (4),
dans laquelle, entre chacun des photoconducteurs (3, 4) et le conducteur d'antenne (2), respectivement, au moins un filtre passe haut (8) est connecté.

2. Antenne de réception (1) selon la revendication 1, dans laquelle, entre chacun des photoconducteurs (3, 4) et l'au moins un filtre haut (8), qui est connecté entre ce photoconducteur (3, 4) et le conducteur d'antenne (2), respectivement, un contact est prévu pour la réception d'un signal de mesure.

3. Antenne de réception (1) selon l'une des revendications précédentes, dans laquelle au moins un des filtres passe haut (8) est ou comprend un condensateur, qui est connecté en série avec un des photoconducteurs (3, 4), et/ou dans laquelle au moins un des filtres passe haut (8) présente une inductance qui est connectée entre un des photoconducteurs (3, 4) et un potentiel de référence.

4. Antenne de réception (1) selon l'une des revendications précédentes, dans laquelle au moins un des filtres passe haut (8) présente un bord de transmission entre 50 GHz et 100 GHz, et/ou dans laquelle le premier photoconducteur (3) et le deuxième photoconducteur (4) sont à une distance inférieure à 300 µm.

5. Récepteur (12) pour un rayonnement térahertzien (30), comprenant
une antenne de réception (1) pour un rayonnement térahertzien (30) selon l'une des revendications 1 à 4 et
au moins une source de lumière (13), conçue pour la génération d'au moins un signal lumineux permettant l'activation du premier photoconducteur (3) et de l'au moins un deuxième photoconducteur (4) de l'antenne de réception (1),
dans lequel l'au moins une source de lumière (13) est couplée de manière optique avec le premier photoconducteur (3) et/ou l'au moins un deuxième photoconducteur (4) de l'antenne de réception (1), pour alimenter en lumière (9) à partir de l'au moins un signal lumineux le premier photoconducteur (3) et le deuxième photoconducteur (4).

6. Récepteur (12) selon la revendication 5, comprenant au moins un séparateur de faisceau (14), conçu pour séparer le signal lumineux généré par la source de lumière (13) en une première partie et en une deuxième partie, où la source de lumière (13) est couplée de manière optique avec le premier photoconducteur (3) et l'au moins un deuxième photoconducteur (4) de l'antenne de réception (1) pour alimenter le premier photoconducteur (3) avec la première partie du signal lumineux et pour alimenter le deuxième photoconducteur (4) avec la deuxième partie du signal lumineux, de sorte que la deuxième partie du signal lumineux atteigne le deuxième photoconducteur (4) avec un décalage de phase défini et/ou une différence de temps de parcours par rapport à la première partie du signal lumineux atteignant le premier photoconducteur (3).

7. Récepteur (12) selon la revendication 6, présentant en outre une unité de retard (17) optique réglable conçue pour rendre le décalage de phase et/ou la différence de temps de parcours de la deuxième partie du signal lumineux sur le deuxième photoconducteur (4) réglable par rapport à la première partie du signal lumineux sur le premier photoconducteur (3).

8. Récepteur (12) selon l'une des revendications 5 à 7, dans lequel l'au moins une source de lumière (13) présente au moins deux lasers à onde continue (L1, L2) désaccordés ou pouvant être désaccordés l'un par rapport à l'autre pour la génération d'au moins un signal de battement optique, et/ou un laser pulsé (L) pour la génération d'impulsions de lumière.

9. Récepteur (12) selon l'une des revendications 5 à 8, présentant en outre une unité d'exploitation, conçue pour l'exploitation d'un premier signal de mesure, correspondant à une partie de basse fréquence (29) du courant d'antenne (28) traversant le premier photoconducteur (3), et d'un deuxième signal de mesure correspondant à une partie de basse fréquence (29) du courant d'antenne (28) traversant le deuxième photoconducteur (4), pour la détermination d'une amplitude et/ou d'une position de phase d'un rayonnement térahertzien (30) reçu, moyennant l'emploi d'un décalage de phase et/ou d'une différence de temps de parcours définis.

10. Système térahertzien (21), comprenant
un émetteur (20), conçu pour générer un rayonnement térahertzien (30), et
un récepteur (12) pour un rayonnement térahertzien (30) selon l'une des revendications 5 à 9, conçu pour la réception du rayonnement térahertzien (30) généré au moyen de l'émetteur (29).

11. Système térahertzien (21) selon la revendication 10,
dans lequel l'émetteur (20) présente un conducteur d'antenne (2) et un élément photosensible (27) qui est couplé optiquement avec le conducteur d'antenne (2) de manière qu'il occasionne, dans un état activé et lors de l'application d'une tension de polarisation, un courant d'antenne (28) traversant le conducteur d'antenne (2) et l'élément photosensible (27).

12. Système térahertzien (21) selon la revendication 11,
dans lequel l'au moins une source de lumière (13) du récepteur (12) est en outre couplée optiquement avec l'élément photosensible (27) de l'émetteur (20) de sorte que l'élément photosensible (27) de l'émetteur (20) puisse être activé par une partie du signal lumineux généré par la source de lumière (13).

13. Système térahertzien (21) selon l'une des revendications 10 à 12,
dans lequel l'émetteur (20) présente un modulateur (26) qui est conçu pour alimenter en information le rayonnement térahertzien (30) généré par l'émetteur (20) par une modulation de phases et/ou une modulation d'amplitudes.

14. Procédé de création et de détection d'un rayonnement térahertzien (30) moyennant l'emploi d'un système térahertzien (21) selon l'une des revendications 10 à 13, dans la mesure où elles se rapportent à la revendication 6, comprenant les étapes :
de génération d'un signal térahertzien (19) au moyen de l'émetteur (20) du système térahertzien (21) ;
de réception du signal térahertzien (19) généré au moyen de l'émetteur (20) à l'aide du récepteur (12) du système térahertzien (21), où la réception comprend les étapes :
d'activation du premier photoconducteur (3) de l'antenne de réception (1) du récepteur (12) par la première partie du signal lumineux généré par l'au moins une source de lumière (13) du récepteur (12),
d'activation de l'au moins un deuxième photoconducteur (4) de l'antenne de réception (1) du récepteur (12) par la deuxième partie du signal lumineux généré par l'au moins une source de lumière (13) du récepteur (12),
de mesure simultanée d'un premier signal de mesure, correspondant à une partie de fréquence basse (29) du courant d'antenne (28) traversant le premier photoconducteur (3), et d'un deuxième signal de mesure, correspondant à une partie de fréquence basse (29) du courant d'antenne (28) traversant le deuxième photoconducteur (4), pendant l'activation du premier photoconducteur (3) et du deuxième photoconducteur (4) ;
et
de détermination de l'amplitude et/ou de la phase du signal térahertzien (19) reçu à partir du premier signal de mesure et du deuxième signal de mesure, moyennant l'emploi du décalage de phase et/ou de la différence de temps de parcours définis entre la première partie et la deuxième partie du signal lumineux.

15. Procédé selon la revendication 14, dans la mesure où il se rapporte à la revendication 13, comprenant en outre les étapes
d'alimentation du signal térahertzien (19) généré au moyen de l'émetteur (20) du système térahertzien (21) par une modulation de la phase et/ou de l'amplitude du signal térahertzien (19) au moyen du modulateur (26) en information et
de détection de l'information, en laquelle le signal térahertzien (19) est alimenté.

16. Procédé selon la revendication 15,
dans lequel, lors de l'alimentation du signal térahertzien (19) généré au moyen de l'émetteur (20) du système térahertzien (21) en information, à la fois la phase et l' amplitude du signal térahertzien (19) sont modulées moyennant l'emploi d'une modulation d'amplitude en quadrature, et
lors de la détection de l'information, laquelle alimente le signal térahertzien (19), le premier signal de mesure et le deuxième signal de mesure sont employés en tant que composants en phase et composants de quadrature.

17. Procédé selon l'une des revendications 14 à 16, comprenant en outre les étapes
de disposition d'un échantillon (23) dans un trajet de faisceau entre l'émetteur (20) et le récepteur (12) du système térahertzien (21), où une partie du signal térahertzien (19) généré par l'émetteur (20) est soumise à une phase et/ou une amplitude modifiées, et/ou à une deuxième différence de temps de parcours par interaction avec l'échantillon (23),
de détection de la phase et/ou de l'amplitude modifiées et/ou de la deuxième différence de temps de parcours provoquée par l'échantillon par interaction avec l'échantillon (23) du signal térahertzien (19) reçu par le récepteur (12), et
de détermination d'une propriété ou de plusieurs propriétés de l'échantillon (23) à partir de la phase et/ou de l'amplitude, et/ou de la fréquence, et/ou de la deuxième différence de temps de parcours modifiées ainsi détectées.
